# EUROPEAN PATENT APPLICATION

(11) **EP 1 717 620 A1**
(43) Date of publication of application: **02.11.2006**
(21) Application number: 05252637.3
(22) Date of filing: 27.04.2005
(51) Int. Cl.: G02B 6/44

(54) **Anti-twisting optical fiber cable**

(71) Applicant: Hsu, Run Chi, Taipei Hsien (TW); Hsu, Hwa Chi, Taipei Hsien (TW)
(72) Inventor: Hsu, Run Chi, Taipei Hsien (TW); Hsu, Hwa Chi, Taipei Hsien (TW)
(74) Representative: Stoner, Gerard Patrick

(57) **Abstract**

An optical fiber cable includes: an optical fiber core wire (11), a reinforcing member (12) selected from aromatic polyamide fiber (such as Kevlar) coaxially covering the optical fiber core wire (11), a left-turn spring coil (13) leftward helically wound and continuously coaxially wound around the reinforcing member (12), a right-turn spring coil (14) rightward helically wound and continuously coaxially wound the left-turn spring coil (13), and an insulator outer layer (15) selected from polyvinyl chloride polymer coaxially cladding the right-turn spring coil (14) to coaxially form an optical fiber cable for increasing anti-twisting property and other mechanical properties.

## Description

The present invention relates to an anti-twisting optical fiber cable as protected by left-turn and right-turn spring coils.

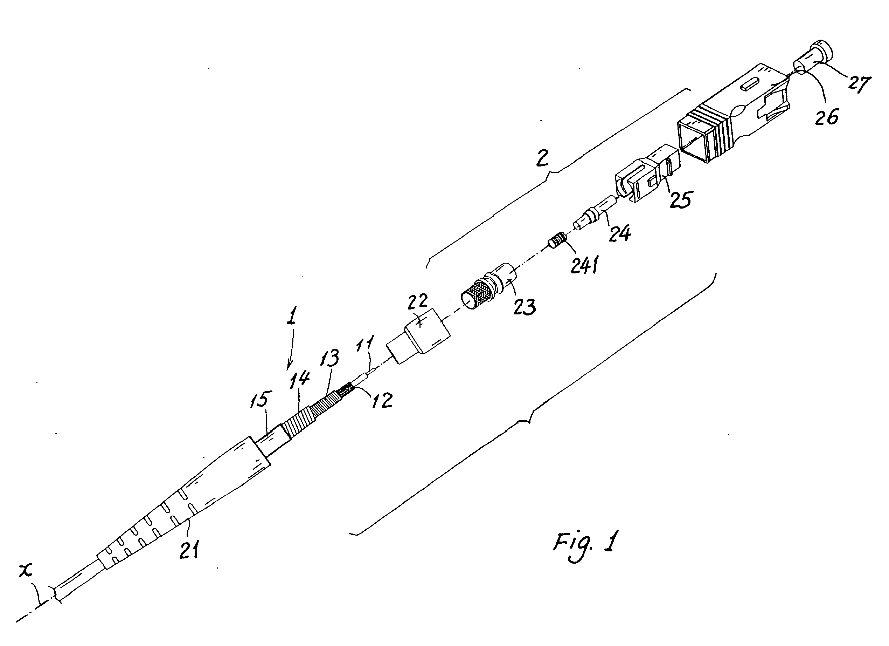

U.S. patent 6,233,384 disclosed a flexible fiber optic cable, having a rigid wire layer (4) surrounding the optic fiber (1) and a mechanical braid (5) surrounding the rigid wire layer (4) as shown in Fig. 1 of the prior art, which however has the following drawbacks:
1. Even the rigid wire layer (4) is spirally wrapped, it lacks of another wire (or an outer wire) spirally wrapped in a direction opposite to the winding direction of the wire (4) in order to counteract a twisting force acting upon the wire (4), thereby influencing its anti-twisting effect of the fiber optic cable.
2. Even the braid layer (5) surrounds the wire layer (4), the braid (5) once formed from silver-plated copper or stainless steel wires may increase the weight, cost and volume of the cable, thereby influencing its commercial value.

The present inventor has found the drawbacks of the prior art and invented the present anti-twisting optical fiber cable.

According to the present invention there is provided an optical fiber cable including: an optical fiber core wire, a reinforcing member selected from aromatic polyamide fiber (such as Kevlar) coaxially covering the optical fiber core wire, a left-turn spring coil leftward helically wound and continuously coaxially wound around the reinforcing member, a right-turn spring coil rightward helically wound and continuously coaxially wound around the left-turn spring coil, and an insulator outer layer selected from polyvinyl chloride polymer coaxially cladding the right-turn spring coil. This arrangement may provide an optical fiber cable with increased anti-twisting property and other mechanical properties including increased tensile strength, compression strength, enhanced lateral pressure resistance; having advantages of lower production cost, and slimmed or fined cable diameter to be suitable for long-distance communication.

The optical fiber cable may also permit a good bending radius or curvature (ranging from a small radius to a large radius) of the cable, having suitable softness and flexibility.

The present invention will be further described with reference to the accompanying drawings, in which:
Fig. 1 is an exploded view showing the elements of the present invention;
Fig. 2 is a partial sectional drawing of the present invention;
Fig. 3 shows the anti-twisting property as effected by the present invention; and
Fig. 4 is a partial sectional drawing of another preferred embodiment of the present invention.

As shown in Figs. 1~3, the optical fiber cable 1 of the present invention comprises: an optical fiber core wire 11, a reinforcing member 12 coaxially covering the core wire 11 about a longitudinal axis X of the optical fiber cable, a left-turn spring coil 13 continuously, coaxially and leftward helically wound around the reinforcing member 12 about the axis X, a right-turn spring coil 14 continuously, coaxially, rightward helically wound around the left-turn spring coil 13 and overlappingly surrounding the left-turn spring coil 13, and an insulator outer layer 15 coaxially cladding the right-turn spring coil 14, thereby coaxially concentrically forming an optical fiber cable 1. The left-turn coil and the right-turn coil respectively indicate opposite winding directions about the axis X. Also, the inner left-turn spring coil may also be modified to be a right-turn spring coil corresponding to an outer left-turn spring coil, not limited in the present invention.

The reinforcing member 12 may be formed with reinforcing fibers or fibrous bundles, including aromatic polyamide fiber such as the tradename Kevlar produced by Du Pont. Other suitable reinforcing materials may also be used in this invention.

The spring coils 13, 14 may be made from stainless steel or other suitable materials.

The reinforcing member 12 may also be eliminated in the present invention when there is no frictional scrubbing or breakage defect existing between the core wire 11 and the spring coil 13 of a fine cable. Or, the optical fiber core wire 11 may be directly coated thereon with a reinforcing layer such as reinforcing polymer, thereby eliminating the Kevlar fibrous layer 12. The reinforcing member (such as Kevlar layer) may also be inserted in between any two neighboring layers of the present invention.

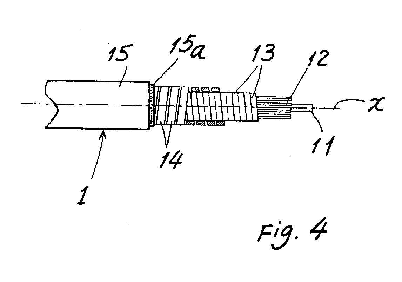

The insulator outer layer 15 is formed on the outermost layer of the cable 1 to be clad on the outer (right-turn) spring coil 14. The insulator outer layer 15 is electrically insulative and may also be thermally insulative. The outer layer 15 as made of electrically insulative materials such as polyvinyl chloride may insulate the spring coils 14, 13 (made of metal materials) from being contacted with the environmental articles to prevent from false or unexpected electric-energy transfer which will damage the whole communication system. As shown in Fig. 4, a protective layer 15a (such as made of braid materials) may be further provided to be sandwiched in between the outer spring coil 14 and the outer layer 15 for further enhancing the strength of the cable.

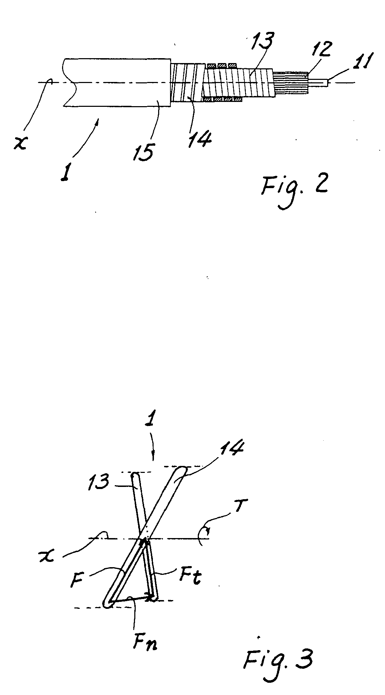

As shown in Fig. 3, when the cable 1 is twisted (T) about the axis X, the twisting force F as frictionally transferred from the outer spring coil 14 will form a normal force fraction Fn and a twisting force fraction Ft upon the inner spring coil 13. Since the twisting force fraction Ft is greatly smaller than the twisting force F (Ft < F), the external twisting force will thus be attenuated. By the way, the external twisting force as inwardly transferred towards the core wire 11 will be correspondingly weakened. Namely, the core wire 11 will be well protected in response to such an external twisting force, thereby increasing the anti-twisting property of the present invention.

If the cable is twisted in a counter direction (not shown) opposite to that (T) as shown in Fig. 3, the external twisting force will also be attenuated to thereby decrease any twisting damage or hazard to the core wire 11.

When compared with the prior art (U.S. patent 6,233,384), the present invention may have the following advantages:
1. The outer spring coil 14, surrounding the inner spring coil 13, when compared with the braid layer (5) of the prior art, the spring coil 14 is a single spring wire helically wound in a right-turn direction, not the braid layer consisting of a plurality of wires interlaced or interweaved with one another; thereby being light in weight, slim in diameter and cheap in cost.
2. Both left-turn spring coil 13 and right-turn spring coil 14 overlappingly wound around the core wire 11 will increase the shock-absorbing property of the cable 1, thereby prolonging the service life and increasing the operational reliability of the cable.
3. The outer right-turn spring coil 14 overlapping the inner left-turn spring coil 13 may form a "braid" from a projective view of the two coils 14, 13 to furnish anti-cutting property of the cable, thereby possibly substituting the outer spring coil 14 of this invention for the braid layer (5) of the prior art for saving cost and volume of the integrated cable in order for making the cable slim and finer.

Accordingly, the present invention may provide an optical fiber cable having enhanced anti-twisting property and other mechanical properties. Still, it may be smoothly bent about an optimum bending radius (or curvature), and may be satisfactorily flexible with a proper softness.

As shown in Fig. 1, the optical fiber cable 1 may be connected with an optical fiber connector 2 to form an optical fiber patchcord to be widely used in optical communication systems. The connector 2 and the optical fiber cable 1 may be assembled by any conventional methods.

The optical fiber cable 1 is inserted into a strain-relief boot 21, and then passing through a clamp tube 22. The front end of the left-turn spring coil 13 of the optical fiber cable 1 may be coplanar with a front tube opening of the clamp tube 22, and the right-turn spring coil 14 and the Kevlar fiber layer 12 are disposed about a rear portion of a supporting sleeve 23 which is disposed within the clamp tube 22. Then, the supporting sleeve 23, the Kevlar layer 12, the spring coil 14 and the clamp tube 22 are pressed together and firmly fastened.

The supporting sleeve 23 has its front portion engaged with a fixing jacket 25 which is embedded in a coupling cap 26. A ferrule 24 tensioned with a small spring 241 is resiliently held in an interior between the supporting sleeve 23 and the fixing jacket 25, having a rear end of the ferrule 24 connected with the optical fiber core wire 11 of the cable 1, and a front end of the ferrule 24 protruding forwardly through the jacket 25 (within the cap 26) to be connected or coupled with another optical fiber cable (not shown).

The coupling cap 26 is finally connected with the strain-relief boot 21 to encase all elements of the optical fiber connector 2 in the cap 26 and the boot 21. A dust-proof plug 27 is inserted into a front opening of the cap 26 for keeping a clean condition.

## Claims

1. An optical fiber cable comprising:
an optical fiber core wire (11) defining a longitudinal axis (X) along a longitudinal center of the core wire;
a reinforcing member (12) coaxially covering the core wire (11) about the axis (X);
a left-turn spring coil (13) continuously, coaxially and leftward helically wound around the reinforcing member (12) about the axis (X);
a right-turn spring coil (14) continuously, coaxially, rightward helically wound around the left-turn spring coil (13) in a winding direction opposite to that of the left-turn spring coil (13) about the axis (X); said right-turn spring coil (14) overlappingly surrounding said left-turn spring coil (13) to projectively cross said right-turn spring coil (14) with the left-turn spring coil (13) from a projective view of two said spring coils (14, 13); and
an insulator outer layer (15) coaxially cladding the right-turn spring coil (14) for coaxially concentrically forming an optical fiber cable (1).

2. An optical fiber cable according to Claim 1, wherein each said spring coil (13 or 14) is made of metal wire.

3. An optical fiber cable according to claim 1 or 2, wherein said outer layer (15) further includes a protective layer (15a) sandwiched in between the right-turn spring coil (14) and the outer layer (15).
